# EUROPEAN PATENT APPLICATION

(11) **EP 1 176 596 A1**
(43) Date of publication of application: **30.01.2002**
(21) Application number: 01305532.2
(22) Date of filing: 26.06.2001
(51) Int. Cl.: G11B 33/04, G11B 23/023

(54) **Case-holders**

(30) Priority: 27.06.2000 GB 0015600
(71) Applicant: White, Matthew Edward Thomas, Haywards Heath, West Sussex RH16 3PP (GB)
(72) Inventor: White, Matthew Edward Thomas, Haywards Heath, West Sussex RH16 3PP (GB)
(74) Representative: Coles, Graham Frederick

(57) **Abstract**

A holder for displaying a CD or DVD case (10) has a bowed configuration with regions (4) sloping up to a central, flat region (5) between a pair of opposed, hooked lugs (2). The back-face (11) of the case (10) rests on the region (5) between upturned lips (6) and the lugs (2) bear resiliently on opposite edges (13,14) of the case (10) to retain it firmly. Rocking of the case (10) frees the projecting rim (16) of the edge (13) from the hook-end (7) of the abutting lug (2). Alternative holders have a central spine (22;45) with laterally-extending legs (23,25;41,43) that terminate in hooked-lugs (24;42) or plain lugs (26;44), and have a wave-contour for back-support of the case (30).

## Description

This invention relates to case-holders, and particularly, though not exclusively to holders for the cases of CDs (compact disks), DVDs (digital versatile disks), Mini-Discs, audio tapes and video tapes.

According to the invention a case-holder comprises means for defining a backing member against which the case is to be retained in a mutually-abutting relationship, and a pair of opposed lugs upstanding from said member, the lugs being spaced apart from one another for receiving the case between them, and wherein the lugs have resilience so as to abut opposite edges of the received case tightly for retaining it between them on the member.

The means defining the backing member may be configured to allow rocking of the case on the backing member while it remains abutted by the lugs, such as to facilitate freeing of the case from the holder. In this respect the means defining the backing member may be of a generally-bowed configuration with a substantially flat central-region for abutment by the back of the case. Alternatively, the means defining the backing member may have the form of a central spine with one or more legs extending in each of opposite lateral directions from it, and in this event the legs may be of wave-configuration for abutment by the back of the case.

One or both of the lugs of the pair may be of hook form for engagement with a projecting rim of the case, and one or more further pairs of lugs may be provided for resilient abutment with the case.

Three case-holders in accordance with the present invention will now be described, by way of example, with reference to the accompanying drawing, in which:
Figure 1 is a perspective view of a first case-holder according to the present invention;
Figures 2 is a side elevation of the case-holder of Figure 1;
Figures 3, 4 and 5 are, respectively, a perspective view, a side elevation, and an end elevation of the case-holder of Figures 1 when in use holding a case;
Figure 6 is a perspective view of a second case-holder according to the present invention;
Figures 7 and 8 are, respectively, a perspective view and a side elevation of the case-holder of Figure 6 when in use holding a case; and
Figure 9 is a perspective view of a third case-holder according to the present invention.

Each of the case-holders to be described with reference to the drawings is for use in retaining the transparent-plastics case of a CD or DVD in place, in storage or otherwise. More particularly, it is for holding the case for display face-on, that is to say to present it with its front-face or lid, and therefore the card-insert within the transparent lid, in full view. This allows the benefit of display of the wording and main artwork of the card-inset to be realised while the case is being retained, for example while mounted on a wall or other structure. The presentation of the retained case face-on in this way is distinct from the usual way of retention in which the case is held edge-on so that it is the limited wording and artwork of the spine-inset alone that can be seen.

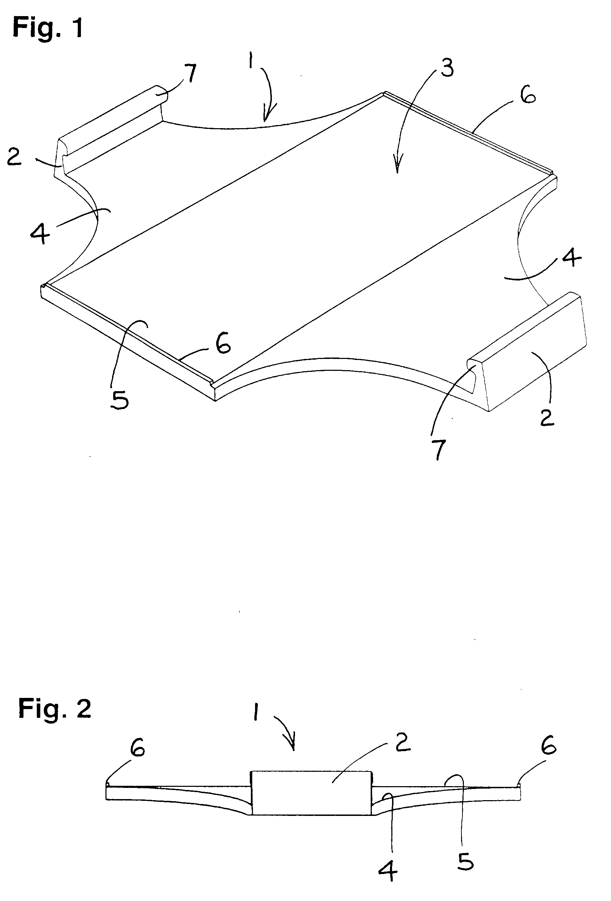

Referring to Figures 1 and 2, the first case-holder is in the form of a plastics or metal plate 1 having a pair of upstanding lugs 2 that oppose one another from either side across the upper surface 3 of the plate 1. The plate 1 is of a generally-bowed configuration giving the surface 3 sloped regions 4 that run upwardly from the individual lugs 2 into a flat, central region 5 that has a small up-turned lip 6 front and back. The lugs 2 have inwardly-turned ends 7, and although inclined slightly inwardly towards one another have resilience to enable them to be flexed to a small extent outwardly from this rest attitude.

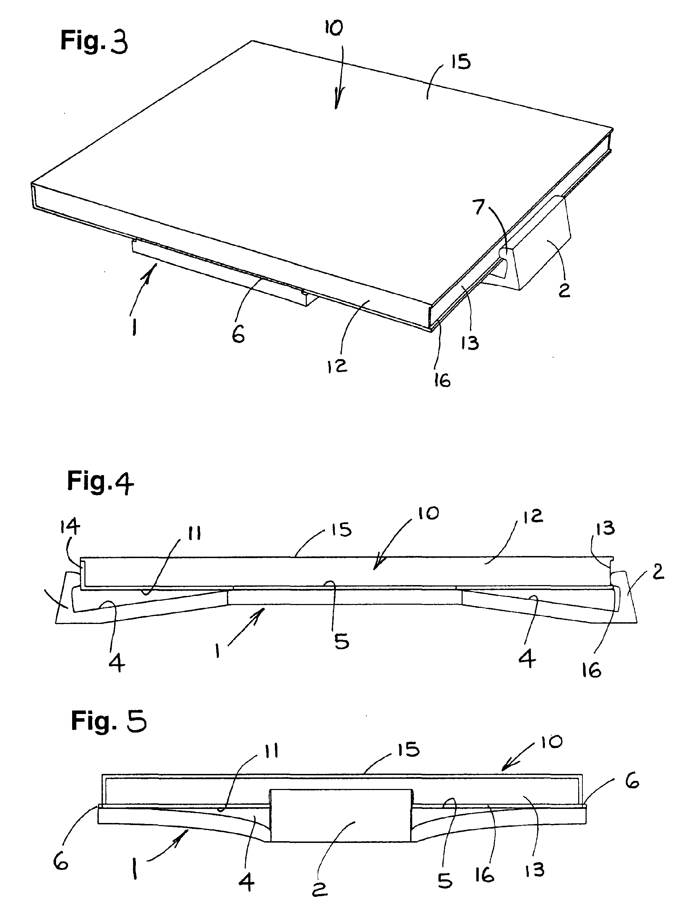

The plate 1, which may be mounted, for example, on a wall or other vertical support structure, is used to hold a CD or DVD case as illustrated in Figures 3 to 5.

Referring to Figures 3 to 5, the rectangular CD or DVD case 10 is inserted between the lugs 2 with its back-face 11 abutting the central region 5 and its longer, side edges 12 just within the up-turned lips 6. The lugs 2 bear hard on the front, lid-opening edge 13 and spine 14 of the case 10 so as to retain the case 10 tightly within the holder with its front-face or lid 15 in full view. The inwardly-turned ends 7 of the lug 2 that bears on the edge 13 clips over the projecting rim 16 of the back-face 11, to ensure retention. The lips 6 restrain the case 10 from sliding out laterally from between the pair of retaining lugs 2, and in this condition the lid 15 can be freely opened and closed and the CD or DVD within removed and replaced as desired.

Removal of the case 10 from the holder is facilitated by the bowed configuration of the plate 1. More particularly, this configuration of surface 3 with the central, raised region 5 separated by the sloping regions 4 between the lugs 2, allows the case 10 to be rocked to one or other side (about the junction line of region 5 with one or the other of the regions 4) to free the edges 13 and 14 from engagement with the lugs 2. During this, the lugs 2 flex outwardly to the extent necessary to enable the projecting rim 16 to ride over the lug 2 at the edge 13 so as to release the case 10 from the holder.

The case 10 can be replaced in the holder simply by urging its back-face 11 onto the lugs 2 so as cause them to flex outwardly until the face 11 is admitted to abut the region 5.

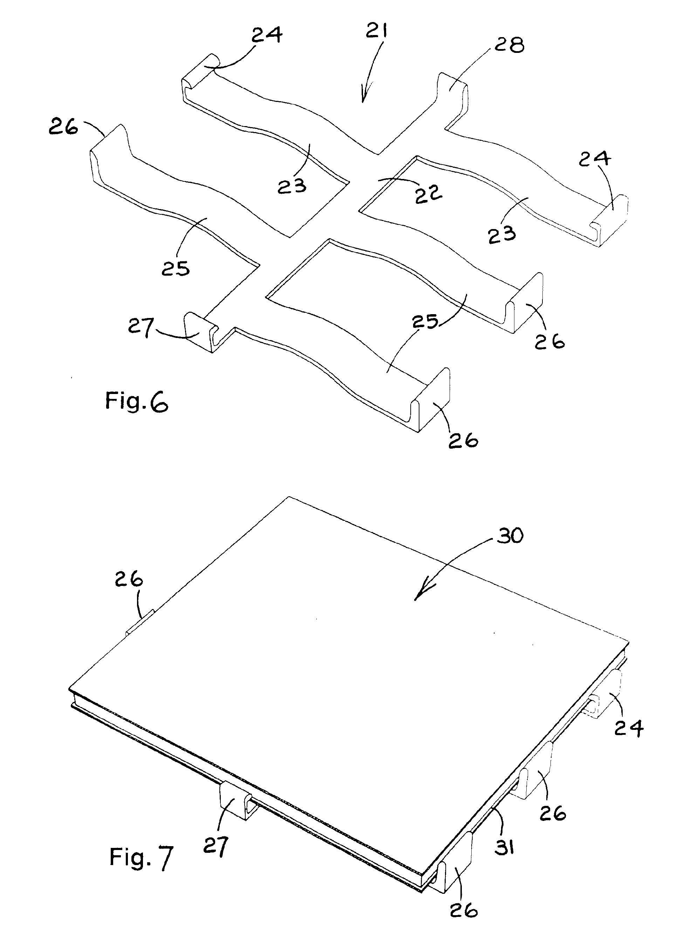

Although the case-holder described with reference to Figures 1 to 5 involves just one pair of opposed lugs 2, more than one pair may be provided to engage the case. This is illustrated by the second case-holder to be described with reference to Figures 6 to 8.

Referring to Figures 6 to 8, the case-holder 21 in this instance has a central spine 22 with two legs 23 which each terminate in a hook-lug 24, extending laterally in opposite directions from it. Three further legs 25 which terminate in plain lugs 26, also extend laterally from the spine 22, two in one direction and one in the other. The spine 22 itself is terminated at opposite ends in a hook-lug 27 and a plain lug 28.

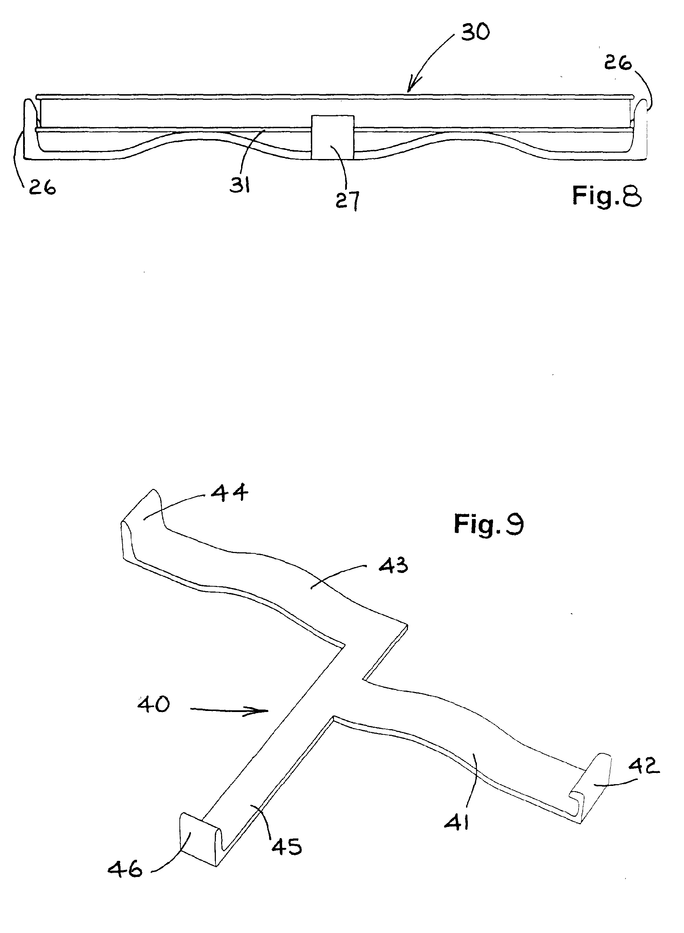

The spine 22 is flat but the legs 23 and 25 have a wave-contour such that a case 30 retained resiliently between the lugs 24, 26, 27 and 28, rests on the crests of the contour (see especially Figure 8). The hook-lugs 24 and 27 engage over the peripheral rim 31 of the case 30 to enhance retention. Rocking the case 30 on the crests of the legs 23 and 25 enables it to be freed from retention.

A case-holder having just two legs on a central spine is illustrated in Figure 9.

Referring to Figure 9, the case-holder 40 in this example has a single leg 41 terminating in a hook-lug 42, and a single leg 43 terminating in a plain lug 44. The two legs 41 and 43 are of wave-contour and extend in opposite directions from a flat spine 45 that terminates at one end only, in a plain lug 46.

When this case-holder is mounted on a wall or other vertical surface, mounting is with the spine 45 extending downwardly so that the case inserted into the holder is restrained from sliding out from between the lugs 42 and 44 by the lug 46. Here again, the retained case rests on the crests of the legs 41 and 43 and can be freed by rocking it on them.

## Claims

1. A case-holder comprising means for defining a backing member against which the case is to be retained in a mutually-abutting relationship, and a pair of opposed lugs upstanding from said member, the lugs being spaced apart from one another for receiving the case between them, and wherein the lugs have resilience so as to abut opposite edges of the received case tightly for retaining it between them on the member.

2. A case-holder according to Claim 1 wherein the means defining the backing member is configured to allow rocking of the case on the backing member while it remains abutted by the lugs, such as to facilitate freeing of the case from the holder.

3. A case-holder according to Claim 2 wherein the means defining the backing member is of a generally-bowed configuration with a substantially flat central-region for abutment by the back of the case.

4. A case-holder according to Claim 3 wherein the central-region is separated from each individual lug by a region of said member that slopes up from the lug to the central region.

5. A case-holder according to Claim 3 or Claim 4 wherein the central-region has upturned lips for restraining the case from movement laterally of the pair of lugs.

6. A case-holder according to Claim 1 or Claim 2 wherein the means defining the backing member has the form of a central spine with one or more legs extending in each of opposite lateral directions from it, and wherein the lugs are provided as lugs that terminate respective ones of the legs.

7. A case-holder according to Claim 6 wherein the legs are of wave-configuration for abutment by the back of the case.

8. A case-holder according to any one of Claims 1 to 7 wherein one or both of the lugs of the pair is of hook form for engagement with a projecting rim of the case.

9. A case-holder according to any one of Claims 1 to 8 including one or more further pairs of opposed lugs upstanding from the backing member for receiving the case between them, the lugs of each further pair having resilience so as to abut opposite edges of the received case tightly for retaining it between them on the backing member.

10. A case-holder according to any one of Claims 1 to 9, in combination with a CD or DVD case, the case being retained in abutting relationship with the backing member and with the lugs abutting opposite edges of the case resiliently.
